# EUROPÄISCHE PATENTSCHRIFT

(11) **EP 2 308 710 B1**
(45) Veröffentlichungstag und Bekanntmachung des Hinweises auf die Patenterteilung: **05.12.2012**
(21) Anmeldenummer: 10186806.5
(22) Anmeldetag: 07.10.2010
(51) Int. Cl.: B60K 15/03, B60K 15/063, B60K 15/067

(54) **Nutzfahrzeugtank**
Commercial vehicle tank
Réservoir de véhicule utilitaire

(30) Priorität: 08.10.2009 DE 102009045500
(43) Veröffentlichungstag der Anmeldung: 13.04.2011
(73) Patentinhaber: Erhard GmbH, 73529 Schwäbisch-Gmünd (DE)
(72) Erfinder: Zanek, Steffen, 73525, Schwaebisch Gmuend (DE)
(74) Vertreter: Rausch, Gabriele

(56) Entgegenhaltungen:
- EP-A1- 1 974 975
- DE-A1- 19 605 703
- DE-A1-102006 056 430

## Beschreibung

Die Erfindung betrifft einen Nutzfahrzeugtank mit einem Kraftstoffbehälter und mit einem aus Kunststoff ausgebildeten Zusatzbehälter gemäß dem Oberbegriff von Anspruch 1. Die Erfindung betrifft auch einen Kraftstoffbehälter zur Bildung eines Nutzfahrzeugtanks nach dem Oberbegriff von Anspruch 11.

Ein gattungsgemäßer Kraftstoffbehälter ist aus der DE 10 2007 040 416 A1 bekannt.

Bei Kraftstoffbehältern setzt sich die Außenhülle aus einer Umfangswandung zusammen, welche stirnseitig durch jeweils eine Stirnwandung abgeschlossen ist. In der Regel ist die Umfangswandung rohrförmig ausgebildet, wobei an deren beiden offenen Enden die Stirnwandungen aufgeschweißt sind. Es sind jedoch auch Kraftstoffbehälter bekannt, die sich aus einem oder mehreren hülsenförmigen Teilen zusammensetzen, bei denen wenigstens ein Teil der Umfangswandung einstückig mit der Stirnwandung ist.

Je nach Ausgestaltung des Kraftstoffbehälters kann dieser einen oder mehrere voneinander getrennte Befüllräume aufweisen. Bekannt ist dabei auch, dass in der Umfangswandung eine oder mehrere Zwischenwände, beispielsweise in Form von Schwallwänden oder in Form von Trennwänden zur Unterteilung des Kraftstoffbehälters angeordnet sind. Kraftstoffbehälter für Nutzfahrzeug sind in der Regel aus Edelstahl, Stahl, Aluminium oder entsprechenden Legierungen hergestellt.

Im Nutzfahrzeugbereich entstand in den letzten Jahren - bedingt durch wachsende Anforderungen an die Umweltverträglichkeit derartiger Fahrzeuge - ein Bedarf an Kraftstoffbehältern, deren Funktion über die eines konventionellen Kraftstoffbehälters hinausgeht. So wurde es beispielsweise in jüngerer Zeit erforderlich, im Rahmen der Maßnahmen zur Schadstoffreduzierung, zum Beispiel bei der Entstickung von Dieselabgasen, Harnstoff bzw. Ad-Blue im Abgassystem von Nutzfahrzeugen einzusetzen. Damit entstand ein Bedarf an Tanks, die zum Mitführen des benötigten, chemisch aggressiven Harnstoffs geeignet sind. Herkömmliche Nutzfahrzeuge weisen hierzu zwei unabhängige Tanks auf, die voneinander getrennt am Nutzfahrzeug angebracht sind.

Aus der gattungsgemäßen Schrift sind verschiedene Lösungen zur Anbindung eines Kunststoffbehälters an einer Stirnseite eines Kraftstoffbehälters bekannt, die darauf beruhen, den Kunststoffbehälter in eine offene Stirnseite der Umfangswandung oder deren Verlängerung einzustecken. Die Befestigung des in die offene Stirnseite eingeschobenen Kunststoffbehälters mit der Umfangswandung kann form- oder kraftschlüssig erfolgen.

Eine weitere vorteilhafte Lösung zur Mitführung eines chemisch aggressiven gasförmigen oder flüssigen Mediums ist in der DE 20 2006 002 035.7 beschrieben. Dabei ist vorgesehen, dass die Innenseite der Tragstruktur eines Behälters mit einer Kunststoff-Sinterschicht bedeckt ist. Hierzu ist die Tragstruktur aus einem vergleichsweise steifen Material, wie beispielsweise einem Metall, gefertigt, auf deren Innenwandung die dünne Kunststoff-Sinterschicht aufgebracht ist. Dabei kann vorgesehen sein, dass der mit der Kunststoff-Sinterschicht versehene Behälter durch eine umlaufende Schweißnaht mit einem zweiten Behälter, bei dem es sich um einen regulären Kraftstoffbehälter handeln kann, verbunden wird.

Die Lösung hat sich für viele Anwendungsgebiete als geeignet herausgestellt, um in kostengünstiger Art und Weise einen aus zwei Teilbehältern gebildeten gemeinsamen großen Nutzfahrzeugtank zu schaffen und diesen in üblicher Weise an einer Halterungseinrichtung, beispielsweise einer Konsole eines Nutzfahrzeuges, anzubringen.

Aus Kostengründen ist es bei der Fertigung von Nutzfahrzeugtanks entscheidend, dass mit möglichst wenig unterschiedlichen Bauteilen verschiedene Typen von Nutzfahrzeugtanks hergestellt werden können. Dies gilt sowohl bezüglich des Volumens der Nutzfahrzeugtanks als auch bezüglich deren äußerer Form, die in der Regel an die baulichen Gegebenheiten des Nutzfahrzeugs angepasst werden muss. Eine möglichst einfache Lösung, um bei verschiedenen Typen von Nutzfahrzeugtanks jeweils einen Zusatzbehälter, insbesondere für die Aufnahme einer Ad-Blue-Lösung bzw. eines Harnstoffes zu integrieren, ist daher von besonderer Bedeutung.

Aus der gattungsgemäßen DE 10 2006 056 430 A1 ist ein Verfahren zum Herstellen eines Nutzfahrzeugtanks aus Kunststoffbekannt, dabei ist vorgesehen, aus einem Kunststoff zwei geschlossene Behälter herzustellen, welche Endsegmente des Tanks bilden. Dabei sind jeweils zwei quer zur Tanklängsrichtung verlaufende Bodenflächen sowie eine umlaufende, die Tankwand bildende Wandfläche ausgebildet. Jeweils eine der Bodenflächen bildet eine Tankstirnwand. Die andere Bodenfläche ist gegenüber dem stirnseitigen Ende der zugeordneten Wandfläche versetzt, so dass ein umlaufender Überstand gebildet wird. Eines der beiden Endsegmente weist einen umlaufenden Überstand mit einem verringerten Durchmesser auf, so dass die Überstände ineinander gesteckt werden können. Alternativ dazu kann zwischen den Endsegmenten wenigstens ein weiteres Modul eingesetzt werden, welches als geschlossener Behälter aus einem Kunststoff hergestellt wird und jeweils zwei zur Tanklängsrichtung verlaufende Bodenflächen sowie eine umlaufende, die Tankwand bildende Wandfläche aufweist. Die beiden Bodenflächen des weiteren Moduls sind dabei gegenüber dem zugeordneten stirnseitigen Ende der Wandfläche versetzt, so dass ein umlaufender Überstand gebildet wird, der geeignet ist, mit einem umlaufenden Überstand eines angrenzenden Endsegments oder eines weiteren Moduls zusammengesteckt zu werden. Die zur Verbindung vorgesehene Kontaktfläche zweier Überstände wird mittels einem Schweissverfahren gleichzeitig aufgeschmolzen.

Der vorliegenden Erfindung liegt die Aufgabe zugrunde, einen Nutzfahrzeugtank mit einem Kraftstoffbehälter und einem Zusatzbehälter zu schaffen, wobei der Zusatzbehälter möglichst einfach und kostengünstig montierbar sein soll.

Diese Aufgabe wird erfindungsgemäß durch Anspruch 1 gelöst.

Dadurch, dass der Zusatzbehälter über einen auf dem Kraftstoffbehälter aufgeschweißten Träger an einer Stirnwandung des Kraftstoffbehälters befestigt ist, wird eine einfache Montage eines Zusatzbehälters ermöglicht. Die erfindungsgemäße Lösung lässt sich im Wesentlichen unabhängig von den Abmessungen des Kraftstoffbehälters realisieren, insbesondere ist es nicht notwendig, für jeden Kraftstoffbehältertyp einen eigenen, angepassten Zusatzbehälter herzustellen.

Die Erfinder haben erkannt, dass sich der Zusatzbehälter besonders vorteilhaft mit dem Kraftstoffbehälter verbinden lässt, wenn dessen Umfangswandung und dessen Stirnwandungen nicht modifiziert, z. B. mit Bohrungen oder andere Befestigungsglieder versehen werden müssen, die in der Folge möglicherweise Dichtigkeitsprobleme verursachen.

Erfindungsgemäß ist vorgesehen, dass der Träger, über den der Zusatzbehälter mit dem Kraftstoffbehälter befestigt ist, außenseitig auf eine Stirnwandung des Kraftstoffbehälters aufgeschweißt ist. Dabei ist vorgesehen, dass der Träger im Wesentlichen planparallel zu der Stirnwandung des Kraftstoffbehälters verläuft. An der von der Stirnwandung abgewandten Stirnseite des Trägers ist der Zusatzbehälter angeordnet und mit dem Träger verbunden. Besonders vorteilhaft ist es dabei, wenn der Träger eine Hauptfläche aufweist, welche sich im Wesentlichen planparallel zu einer Hauptfläche der Stirnwandung erstreckt, wobei sich an die Hauptfläche des Trägers ein im Wesentlichen rechtwinklig zu der Hauptfläche verlaufendes hülsenartiges Kontaktstück anschließt, dessen freies Ende mit der Stirnwandung des Kraftstoffbehälters verschweißt ist und die Hauptfläche des Trägers auf Abstand zu der Hauptfläche der Stirnwandung hält.

Besonders eignet es sich dabei, wenn es sich bei dem Träger um eine Trennwand, eine Zwischenwand, eine Stirnwand, einen Außenboden oder eine Schwallwand des Kraftstoffbehälters handelt. Diese weisen bereits eine Höhe und eine Breite auf, die den Abmessungen der Stirnwandung des Kraftstoffbehälters in Höhe und Breite entspricht. Ferner weisen diese an ihrem Außenumfang im Regelfall eine hülsenartige Verlängerung auf bzw. sind am Außenumfang so umgebogen bzw. geprägt, dass es in einfacher Weise möglich ist, die Trennwand, die Stirnwand, die Zwischenwand, die Außenwand oder die Schwallwand auf die Außenseite der Stirnwandung des Kraftstoffbehälters aufzuschweißen. Grundsätzlich kann die Befestigung auch durch Nieten oder Kleben
oder ein anderes geeignetes Verbindungsverfahren erfolgen. Der Einsatz eines Schweißprozesses eignet sich jedoch vorliegend in besonderer Weise prozesssicher eine stabile Verbindung herzustellen.

Durch die Ausbildung des Trägers als Trennwand, als Stirnwand, als Zwischenwand, als Außenboden oder als Schwallwand kann der Zusatzbehälter stabil und sicher mit dem Kraftstoffbehälter verbunden werden, ohne dass die Außenhülle des Kraftstoffbehälters beeinträchtigt wird.

Besonders vorteilhaft ist es, wenn eine Schwallwand des Kraftstoffbehälters als Träger eingesetzt wird. Schwallwände weisen Durchgangsöffnungen bzw. -bohrungen auf, die es, wenn die Schwallwand im Inneren eines Kraftstoffbehälters eingesetzt wird, ermöglichen, dass Kraftstoff von einer Seite der Schwallwand zur anderen strömen kann. Der Schwallwand kommt dabei die Funktion zu, Kraftstoffbewegungen im Inneren des Kraftstoffbehälters zu reduzieren. Die Erfinder haben nunmehr erkannt, dass die in den Schwallwänden vorhandenen Öffnungen in besonders vorteilhafter Weise verwendet werden können, um einen Zusatzbehälter anzudocken bzw. anzubringen. Die Schwallwand kann dabei mit ihrer umlaufenden Außenkante auf die Stirnwandung des Kraftstoffbehälters aufgeschweißt. Die in der Schwallwand vorhandenen Öffnungen können in einer möglichen vorteilhaften Ausgestaltung als Aufnahmen verwendet werden, um dort - gegebenenfalls unter Zuhilfenahme weiterer Befestigungsmittel - den Zusatzbehälter anzubringen. Es ist dabei nicht notwendig, alle Öffnungen in der Schwallwand als Aufnahmen zu verwenden, es kann ausreichend sein, wenn zumindest eine der Öffnungen, vorzugsweise mindestens zwei Öffnungen, als Aufnahmen verwendet werden.

Besonders vorteilhaft ist es, wenn die Öffnungen mit einem Gewinde versehen werden bzw. wenn eine Gewindemuffe, eine Mutter oder dergleichen so in der Öffnung fixiert wird, dass der Zusatzbehälter angeschraubt werden kann. Hierzu können Fixierelemente, vorzugsweise Schrauben, verwendet werden. Die Gewindemuffe oder die Mutter können durch bekannte Maßnahmen, beispielsweise durch Verprägen, Vernieten oder Punktschweißen, im Bereich der Öffnung fixiert bzw. vorfixiert werden, bevor der Zusatzbehälter angeschraubt wird. Vorzugsweise wird die Gewindemuffe bzw. die Mutter an der von dem Zusatzbehälter abgewandten Stirnseite der Schwallwand angebracht. Durch das Ansetzen des Zusatzbehälters an der anderen Stirnseite der Schwallwand und das Einschrauben von Schrauben wird die Gewindemuffe bzw. die Mutter fest an die von dem Zusatzbehälter abgewandte Stirnseite der Schwallwand angedrückt.

Allgemein wird zur Befestigung des Zusatzbehälters an der Schwallwand ein Fixierelement, mit welchem der Zusatzbehälter versehen ist, mit der Aufnahme in der Schwallwand in Eingriff gebracht.

Insofern der Träger als Trennwand, als Zwischenwand, als Außenboden oder als Stirnwandung ohne bereits vorhandene Öffnungen ausgebildet ist, kann der Zusatzbehälter auf beliebige Art und Weise angebracht werden. Auch in diesem Fall eignet es sich jedoch, den Zusatzbehälter mit einer Öffnung oder einer Bohrung zu versehen. Diese Öffnung oder Bohrung kann dabei vorzugsweise ein Gewinde aufweisen oder mit einer Mutter, einer Gewindemuffe oder dergleichen versehen werden, damit der Zusatzbehälter vorzugsweise verschraubt werden kann.

Von Vorteil ist es, wenn es sich bei der Stirnwandung des Kraftstoffbehälters, an der über den Träger der Zusatzbehälter befestigt wird, nicht um eine herkömmliche Stirnwandung handelt. Zum stirnseitigen Verschließen der Umfangswandung kann zur Realisierung der vorliegenden Erfindung vorzugsweise eine Trennwand verwendet werden. Trennwände werden regelmäßig im Inneren von Kraftstoffbehältern eingesetzt, um zwei Medien voneinander zu trennen. Eine derartige Trennwand zeichnet sich dadurch aus, dass diese an ihrem Außenumfang eine hülsenartige Verlängerung aufweist, auf deren einem Ende die Umfangswandung und auf deren anderem Ende der Träger aufschiebbar bzw. aufsteckbar ist. Die hülsenartige Verlängerung kann dabei vorzugsweise einen ringförmig umlaufenden Vorsprung aufweisen, dessen Außenumfang wenigstens annähernd an den Außenumfang des Trägers und den Außenumfang der Umfangswandung angepasst ist. Dem Vorsprung kommt dabei die Funktion zu, die aufeinander ausgerichteten Enden des Trägers und der Umfangswandung voneinander zu trennen. Vorzugsweise können die Enden jeweils wenigstens annähernd bündig an den umlaufenden Vorsprung herangefahren und dort verschweißt werden. Die hülsenartige Verlängerung weist somit vorzugsweise einen Außenumfang auf, der geringfügig kleiner ist als der Innenumfang des Trägers oder der Umfangswandung, zumindest in dem Bereich, in dem diese aufgeschoben werden sollen.

Eine besonders bevorzugte Trennwand ist in der DE 20 2005 021 121 beschrieben. Die hülsenartige Verlängerung weist dabei einen ringförmigen Vorsprung auf, das sogenannte Kopfteil, an dessen beiden zu den Stirnseiten des Kraftstoffbehälters gerichteten Seiten Auflageschultern angeordnet sind. Der Träger und die Umfangswandung liegen jeweils mit ihrer inneren Wandung auf den Auflageschultern auf.

Die Ausbildung der Stirnwandung des Kunststoffbehälters durch eine Trennwand ermöglicht es, in besonders einfacher Weise einen Träger für den Zusatzbehälter anzubringen. Dies gilt insbesondere, wenn es sich bei dem Träger um ein Bauteil des Kraftstoffbehälters, beispielsweise eine Schwallwand, eine Zwischenwand, eine Stirnwandung, einen Außenboden oder eine Trennwand handelt. Diese können durch die Ausgestaltung der Stirnwandung des Kraftstoffbehälters als Trennwand besonders einfach aufgeschoben und anschließend verschweißt werden. Insofern der aufzuschiebende Träger eine Öffnung oder eine Bohrung aufweist, die zur Aufnahme eines Fixierelements des Zusatzbehälters ausgebildet ist, ist vorzugsweise vorgesehen, dass eine Gewindemuffe oder eine Mutter an der von dem Zusatzbehälter abgewandten Stirnseite des Trägers bereits aufgeschweißt oder anderweitig befestigt ist, bevor der Träger auf die als Trennwand ausgebildete Stirnwandung des Kraftstoffbehälters aufgeschweißt wird.

Von Vorteil ist es, wenn das Fixierelement eine Schraube ist und der Zusatzbehälter eine Durchgangsbohrung zur Durchführung der Schraube aufweist, welche sich von einer Stirnseite des Zusatzbehälters zu einer gegenüberliegenden Stirnseite erstreckt. Die Schraube wird an der von dem Kraftstoffbehälter abgewandten Stirnseite in die Durchgangsbohrung eingeführt. Die Schraube durchdringt die Durchgangsbohrung und wird mit dem Gewinde oder der Mutter der Aufnahme verschraubt.

Eine derartige Durchgangsbohrung bzw. ein "Tunnel" lässt sich in dem aus Kunststoff gebildeten Zusatzbehälter einfach ausbilden und ermöglicht eine stabile Anbindung.

Von Vorteil ist es, wenn der Zusatzbehälter wenigstens über zwei Befestigungspunkte (beispielsweise realisiert durch die Kombination Fixierelement und Aufnahme bzw. Gewinde) im oberen Bereich des Trägers befestigt ist, wenn der Nutzfahrzeugtank in der dafür vorgesehenen Weise an einem Nutzfahrzeug befestigt ist. Zur Erhöhung der Stabilität kann es dabei von Vorteil sein, wenn der Zusatzbehälter zusätzlich wenigstens über einen weiteren Befestigungspunkt, vorzugsweise im unteren Bereich des Trägers befestigt ist. Dadurch ergibt sich insbesondere für Zusatzbehälter, die ein größeres Volumen transportieren, eine besonders stabile Verbindung.

In einer vorteilhaften Ausgestaltung der Erfindung kann ferner vorgesehen sein, dass zwischen dem Träger und dem Zusatzbehälter wenigstens ein Adapterelement angeordnet ist, welches von wenigstens einem Fixierelement durchdrungen wird. Durch das Adapterelement, welches vorzugsweise aus Kunststoff ausgebildet ist, lässt sich der Zusatzbehälter besonders einfach an dem Träger anordnen. Eventuelle Unebenheiten können dabei noch ausgeglichen werden. In einer Ausgestaltung der Erfindung kann vorgesehen sein, dass das Adapterelement schienenförmig ausgebildet ist und wenigstens zwei, vorzugsweise benachbart zueinander angeordnete Befestigungspunkte umfasst. Vorzugsweise durchdringt eine entsprechende Anzahl von Fixierelementen das Adapterelement. Von Vorteil ist es dabei, wenn wenigstens im oberen Bereich des Trägers ein schienenförmiges Adapterelement ausgebildet ist. Besonders vorteilhaft kann es zur Erhöhung der Stabilität sein, wenn vorzugsweise parallel dazu verlaufend auch am unteren Ende des Trägers ein entsprechend schienenförmig ausgebildetes Befestigungselement angebracht ist.

Von Vorteil ist es, wenn der Zusatzbehälter einen Befüllraum zur Aufnahme eines Volumens von 5 bis 50 Litern, vorzugsweise 20 bis 40 Liter, aufweist. Weiterhin ist es von Vorteil, wenn der Zusatzbehälter eine Höhe aufweist, die wenigstens annähernd der Höhe des Kraftstoffbehälters entspricht und/oder wenn der Zusatzbehälter eine Breite aufweist, welche wenigstens annähernd der Breite des Kraftstoffbehälters entspricht. Die "Länge" des Zusatzbehälters, d. h. die Erstreckung in eine Längsrichtung des Kraftstoffbehälters kann bei dem Zusatzbehälter im Verhältnis zu den anderen Abmessungen relativ gering sein und kann vorzugsweise lediglich 5 bis 20 cm betragen. Unter "Länge" ist dabei die Erstreckung des Nutzfahrzeugtanks in eine Richtung parallel zur Längsachse des Nutzfahrzeugs zu verstehen, wenn der Nutzfahrzeugtank in der vorgesehenen Weise montiert ist.

Insofern ein kleineres Volumen des Befüllraums des Zusatzbehälters gewünscht ist, ist es zu bevorzugen, die Höhe des Zusatzbehälters zu reduzieren und die Breite unverändert zu lassen.

Der Zusatzbehälter kann auch eine an den zur Verfügung stehenden Bauraum des Nutzfahrzeugs angepasste komplexe Form aufweisen, z. B. kann eine Aussparung für den Radkasten vorsehen sein.

In einer besonderen Ausführungsform kann vorgesehen sein, dass die Stirnwandung des Kraftstoffbehälters mit einer Anschlussmuffe versehen ist, so dass ein Zugang zu dem Befüllraum des Kraftstoffbehälters geschaffen ist. Die Anschlussmuffe kann dabei über eine Leitung mit einem entsprechenden Anschluss des Zusatzbehälters verbunden werden, so dass die Befüllräume beider Tanks zusammengeschaltet sind.

Ein besonders geeigneter Kraftstoffbehälter als Grundlage, um gemeinsam mit einem Kunststoffbehälter einen Nutzfahrzeugtank auszubilden, ergibt sich aus Anspruch 11. Dabei ist vorgesehen, dass der Kraftstoffbehälter eine Umfangswandung und zwei stirnseitig auf die Umfangswandung aufgeschweißte Außenböden aufweist, wodurch wenigstens ein Befüllraum für einen Kraftstoff ausgebildet wird. Vorgesehen ist dabei, dass außenseitig auf einen der beiden Außenböden ein weiterer planparallel verlaufender Außenboden oder eine Schwallwand aufgeschweißt ist. Dadurch entsteht an einer Stirnseite des Kraftstoffbehälters ein doppelter Außenboden, wodurch es möglich ist, den äußeren der beiden Außenböden anzubohren oder diesen als Schwallwand mit Durchgangsöffnungen bzw. Durchlassbohrungen auszubilden, damit daran der Kunststoffbehälter befestigt werden kann. Vorzugsweise ist der die Umfangswandung verschließende Außenboden mit dem zusätzlich aufgeschweißten Außenboden identisch. Falls eine Schwallwand aufgeschweißt wird entspricht diese, abgesehen von den schwallwandtypischen Ausgestaltungen, vorzugsweise ebenfalls dem Außenboden

Es ist vorteilhaft, wenn nur einer der Außenböden mit einem weiteren Außenboden oder einer Schwallwand versehen und somit doppelwandig ausgebildet ist. Die Umfangswandung kann ansonsten, inklusive des gegenüberliegenden zweiten Außenbodens, jeweils nur einwandig ausgebildet sein.

Vorteilhafte Ausgestaltungen und Weiterbildungen der Erfindung ergeben sich aus den weiteren abhängigen Ansprüchen. Nachfolgend ist anhand der Zeichnung ein Ausführungsbeispiel der Erfindung prinzipmäßig dargestellt.

Es zeigt:
- Fig. 1: eine Seitenansicht auf einen erfindungsgemäßen Nutzfahrzeugtank vor der Befestigung des Trägers und des Zusatzbehälters an dem Kraftstoffbehälter;
- Fig. 2: eine Seitenansicht des erfindungsgemäßen Nutzfahrzeugtanks gemäß Fig. 1 im zusammengebauten Zustand;
- Fig. 3: eine Draufsicht auf einen erfindungsgemäßen Nutzfahrzeugtank gemäß Pfeilrichtung III der Fig. 2;
- Fig. 4: eine stirnseitige Ansicht auf den Nutzfahrzeugtank gemäß Pfeilrichtung IV der Fig. 2;
- Fig. 5: eine Draufsicht auf eine Stirnseite des Trägers in einer Ausgestaltung als Schwallwand;
- Fig. 6: einen Schnitt durch einen Kraftstoffbehälter im Bereich einer Stirnwandung, wobei die Stirnwandung des Kraftstoffbehälters durch eine Trennwand gebildet ist, deren hülsenartige Verlängerung einen ringförmigen Vorsprung mit zwei daran angrenzenden Schultern aufweist, wobei auf eine Schulter ein Endstück der Umfangswandung und auf die andere Schulter ein Träger in einer Ausgestaltung als Schwallwand aufgeschoben ist;
- Fig. 7: eine Prinzipdarstellung der Verbindungsteile, um einen Zusatzbehälter an einem Träger zu befestigen; und
- Fig. 8: eine alternative Ausgestaltung der aneinander angrenzenden Stirnseiten des Trägers und des Zusatzbehälters.

Das dargestellte und nachfolgend beschrieben Ausführungsbeispiel zeigt einen Nutzfahrzeugtank 1 mit einem Kraftstoffbehälter 2 und einem Zusatzbehälter 3. Nutzfahrzeugtanks 1 mit einem Kraftstoffbehälter 2 und einem Zusatzbehälter 3 sind hinsichtlich ihrer grundsätzlichen Funktionsweise hinreichend bekannt, so dass nachfolgend nur auf die für die Erfindung wesentlichen Merkmale näher eingegangen wird. Der in den Figuren dargestellte Kraftstoffbehälter 2 ist nur mit dem für die vorliegende Erfindung interessierenden Teilbereich dargestellt. Der Kraftstoffbehälter 2 weist eine Umfangswandung 4 mit zwei Stirnwandungen 5 auf, welche wenigstens einen Befüllraum 6 für einen Kraftstoff ausbilden. In der Zeichnung dargestellt ist lediglich ein Teilbereich der Umfangswandung 4 mit einer Stirnwandung 5. Der Befüllraum 6 ist im Ausführungsbeispiel zur Befüllung mit Diesel oder Biodiesel vorgesehen. Der Befüllraum 6 ist derart gestaltet, dass dieser ein Volumen von 300 bis 1.600 Litern, vorzugsweise 500 bis 1.000 Liter, aufnehmen kann.

Die Umfangswandung 4 und die Stirnwandungen 5 sind im Ausführungsbeispiel aus Metall ausgebildet. Im Ausführungsbeispiel handelt es sich bei dem Metall um Aluminium oder eine Aluminiumlegierung. In Frage kommt jedoch auch eine Ausgestaltung aus einem anderen metallischen Werkstoff, gegebenenfalls auch aus einem Kunststoff.

Die Umfangswandung 4 ist rohrförmig ausgebildet und wird durch die beiden Stirnwandungen 5 stirnseitig so verschlossen bzw. verschweißt, dass ein Befüllraum 6 geschaffen wird.

Der Zusatzbehälter 3 ist aus Kunststoff ausgebildet und weist eine Höhe und eine Breite auf, die im Wesentlichen der Höhe und der Breite des Kraftstoffbehälters 2 entspricht. Der Zusatzbehälter 3 dient zur Aufnahme eines Kraftstoffs oder eines Betriebsstoffs. In dem Ausführungsbeispiel ist vorgesehen, dass der Zusatzbehälter 3 zur Aufnahme eines Betriebsstoffs, nämlich einer Ad-Blue-Lösung bzw. eines Harnstoffs, verwendet wird.

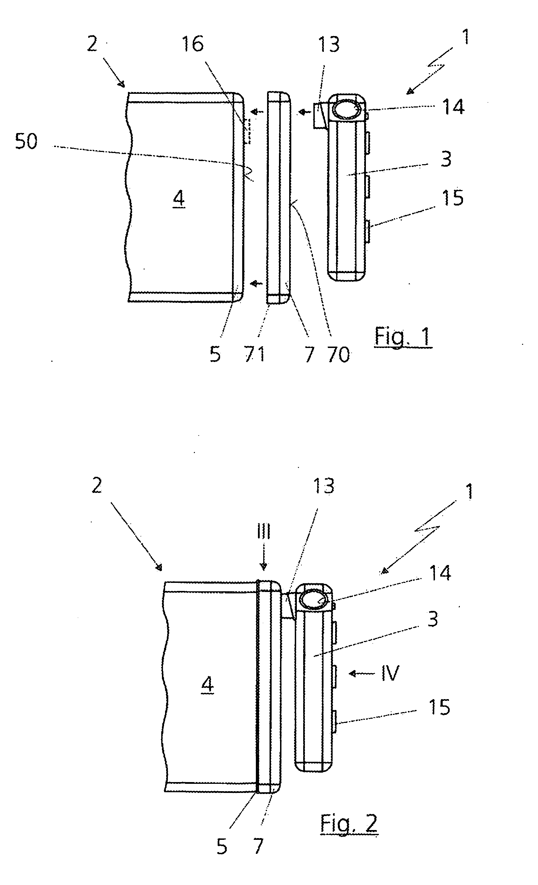

Wie sich aus einer Zusammenschau der Figuren 1 bis 4 ergibt, wird der Zusatzbehälter 3 über einen auf den Kraftstoffbehälter 2 aufgeschweißten Träger 7 an der Stirnwandung 5 des Kraftstoffbehälters 2 befestigt. Im Ausführungsbeispiel ist nur auf genau eine Stirnwandung 5 ein Träger 7 aufgeschweißt. Der Träger 7 wird dabei auf die Stirnwandung 5 aufgeschweißt. Im Ausführungsbeispiel ist hierfür vorgesehen, dass der Träger 7 stirnseitig auf die Stirnwandung 5 aufgesetzt und umlaufend mit dieser verschweißt wird. Im Ausführungsbeispiel ist der Träger 7 als Schwallwand 7 ausgebildet. Die Schwallwand 7 weist dabei Durchbrüche bzw. Öffnungen 8 auf. Grundsätzlich kann der Träger 7 auch eine Trennwand, eine Zwischenwand, ein Außenboden oder eine Stirnwand des Kraftstoffbehälters 2 sein. So ist es beispielsweise möglich, dass auf die Stirnwandung 5 ein mit der Stirnwandung 5 baugleiches Element als Träger 7 aufgeschweißt wird. Ein einfaches Ansetzen der den Träger 7 bildenden Stirnwandung auf die Stirnwandung 5 des Kraftstoffbehälters 2 kann sich dadurch ergeben, dass entsprechende Abkantungen oder Verjüngungen am stirnseitigen Ende der Stirnwandung 5 vorgesehen sind, so wie dies in den Figuren dargestellt ist.

Wie sich aus den Figuren ergibt, insbesondere aus Fig. 1, wird der Zusatzbehälter 3 mittels des Trägers 7 außenseitig an einer Stirnwandung 5 des Kraftstoffbehälters 2 angeordnet. Der Träger 7 verläuft im Wesentlichen planparallel zu der Stirnwandung 5 und ist auf diese aufgeschweißt. Der Träger 7 weist eine Hauptfläche 70 (siehe Fig. 1) auf, welche sich im Wesentlichen planparallel zu einer Hauptfläche 50 der Stirnwandung 5 erstreckt. An die Hauptfläche 70 des Trägers 7 schließt sich ein im Wesentlichen rechtwinklig zu der Hauptfläche 70 verlaufendes hülsenartiges Kontaktstück 71 (bzw. eine Verlängerung) an. Das freie Ende des Kontaktstücks 71 wird mit der Stirnwandung 5 verschweißt. Durch das hülsenartige Kontaktstück 71 wird die Hauptfläche 70 des Trägers 7 auf Abstand zu der Hauptfläche 50 der Stirnwandung 5 gehalten. Der Abstand, den die Hauptflächen 50, 70 voneinander einhalten, ist dabei jedoch nicht ausschließlich durch die Höhe des hülsenartigen Kontaktstücks 71 bestimmt, sondern hängt von weiteren Faktoren ab. Ein Abstand zwischen den Hauptflächen 50, 70 ist vorteilhaft, um eine Beschädigung der Stirnwandung 5 durch die Fixierung bzw. Befestigung des Zusatzbehälters 3 an dem Träger 7 zu vermeiden.

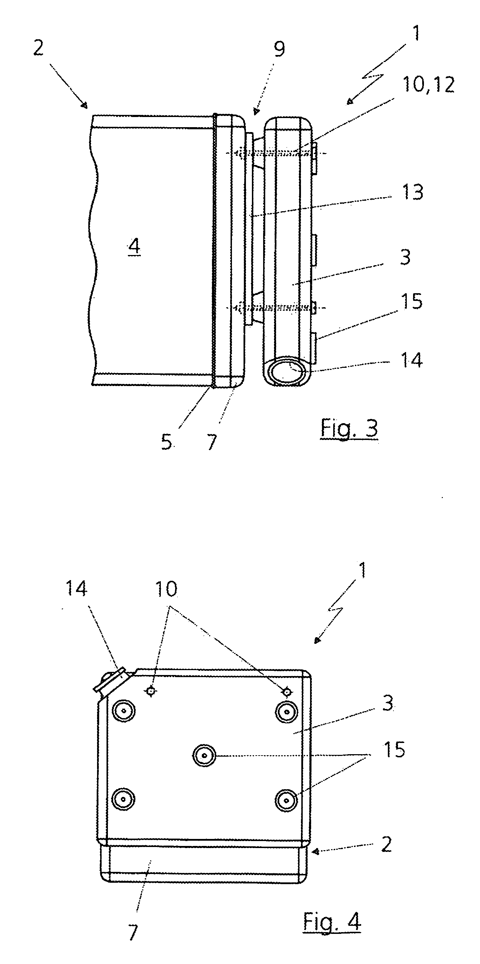

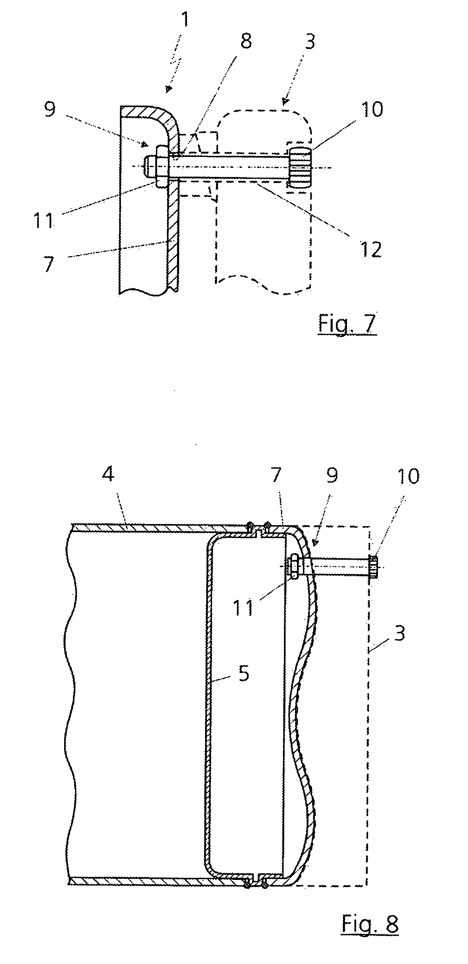

Im Ausführungsbeispiel dienen die Öffnungen 8 der Schwallwand als Aufnahmen 9 bzw. als Befestigungspunkte zur Befestigung des Zusatzbehälters 3. Details zur Befestigung ergeben sich aus den Figuren 3 und 7. Dabei ist vorgesehen, dass der Zusatzbehälter 3 wenigstens ein, vorzugsweise mindestens zwei Fixierelemente 10 aufweist. Die Fixierelemente 10 sind zur Befestigung des Zusatzbehälters 3 an der Schwallwand 7 mit den Aufnahmen 9 bzw. den Öffnungen 8 in Eingriff zu bringen. Hierzu ist im Ausführungsbeispiel vorgesehen, dass an der von dem Zusatzbehälter 3 abgewandten Stirnseite der Schwallwand 7 eine Mutter 11 angeordnet ist. Die Mutter 11 kann vorzugsweise mit der Stirnseite der Schwallwand verprägt sein. Dies ist prinzipmäßig in Fig. 7 dargestellt. Durch das Eindrehen des Fixierelements 10, bei dem es sich vorzugsweise um eine Schraube handelt, wird die Mutter 11 in Richtung der beiden Pfeile (Fig. 7) verspannt, so dass sich eine feste und stabile Verbindung ergibt.

Im Ausführungsbeispiel ist vorgesehen, dass der Zusatzbehälter 3 eine Durchgangsbohrung 12 zur Durchführung der Schraube 10 aufweist. Die Durchgangsbohrung 12 erstreckt sich dabei von einer Stirnseite des Zusatzbehälters 3 zu der gegenüberliegenden Stirnseite. Die Schraube 10 wird dabei an der von dem Kraftstoffbehälter 2 abgewandten Stirnseite in die Durchgangsbohrung 12 eingesteckt und mit der Mutter 11 verschraubt.

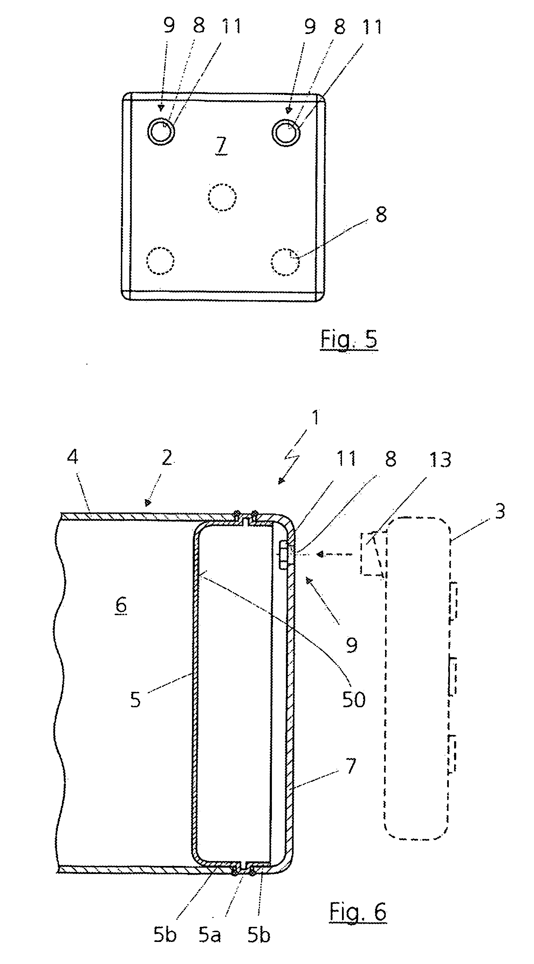

Fig. 5 zeigt, dass im Ausführungsbeispiel lediglich zwei von fünf prinzipmäßig dargestellten Öffnungen 8 der Schwallwand 7 als Aufnahmen 9 ausgebildet sind. Die beiden Öffnungen 8 sind dabei an ihrer in Fig. 5 nicht dargestellten Rückseite mit Muttern 11 versehen, von denen ein Teilstück durch die Öffnung 8 ersichtlich ist.

Wie sich aus einer Zusammenschau der Figuren 1 bis 5 ferner ergibt, sind im Ausführungsbeispiel zwei Befestigungspunkte (entsprechend den Aufnahmen 9) vorgesehen, über die der Zusatzbehälter 3 an der Schwallwand 7 befestigt ist. Die Befestigungspunkte sind dabei in einem oberen Bereich der Schwallwand 7 ausgebildet.

Wie sich ferner aus den Figuren 1 bis 3 ergibt, ist im Ausführungsbeispiel zwischen der Schwallwand 7 und dem Zusatzbehälter 3 ein Adapterelement 13 vorgesehen. Das Adapterelement 13 ist im Ausführungsbeispiel schienenförmig ausgebildet und erstreckt sich über beide Befestigungspunkte (Aufnahmen 9). Das Adapterelement 13 wird in seinen Endbereichen von jeweils einer Schraube 10 durchdrungen. Das Adapterelement 13 kann alternativ auch so ausgestaltet sein, dass dieses nur einen Befestigungspunkt umgibt bzw. dass dieses nur von einer Schraube 10 durchsetzt wird. Das Adapterelement 13 kann vorzugsweise aus Gummi oder Kunststoff ausgebildet sein, um eine elastische Anbindung zu ermöglichen.

Wie sich aus den Figuren 1, 2, 6 und 7 ergibt, weist das Adapterelement 13 einen Querschnitt auf, der sich von unten nach oben (im eingebauten Zustand des Nutzfahrzeugtanks) verjüngt. Dadurch wird eine schräge Ansatzfläche geschaffen, an die der Zusatztank 3 mit einer vorzugsweise entsprechend korrespondierenden schrägen Fläche angelegt werden kann. Gegebenenfalls kann hierbei auch eine Schwalbenschwanzverbindung vorgesehen sein. Es handelt sich bei diesen Ausgestaltungen des Adapterelements 13 um eine optionale Gestaltung.

In den Figuren 1 bis 4 ist prinzipmäßig eine Befüllöffnung 14 für den Zusatzbehälter dargestellt.

Der Zusatzbehälter 3 weist Anbindungspunkte 15 zur Anbindung eines nicht dargestellten Abschlussbleches auf.

Fig. 8 zeigt eine strichliniert dargestellte alternative Ausgestaltung. Hierbei handelt es sich um eine Anschlussmuffe 16, mit der die Stirnwandung 5 versehen sein kann. Somit wird ein Zugang zu dem Befüllraum 6 des Kraftstoffbehälters 2 geschaffen, damit dieser gegebenenfalls mit dem Befüllraum des Zusatzbehälters 3 über eine Leitung verbunden werden kann. Im Ausführungsbeispiel ist jedoch vorgesehen, dass die Befüllräume des Kraftstoffbehälters 2 und des Zusatzbehälters 3 voneinander getrennt sind.

Fig. 6 zeigt prinzipmäßig dargestellt eine besonders geeignete Ausgestaltung der Stirnwandung 5. Die Stirnwandung 5 ist dabei als Trennwand ausgebildet und weist hierzu im Bereich ihres Außenumfangs eine hülsenartige Verlängerung auf, welche einen ringförmigen, umlaufenden Vorsprung 5a ausbildet, an die sich zwei ringförmig umlaufende Schultern 5b anschließen. Die ringförmig umlaufenden Schultern 5b sind dabei derart ausgebildet, dass auf eine Schulter 5b die Umfangswandung 4 aufgeschoben bzw. aufgelegt werden kann und auf die andere Schulter 5b die Schwallwand 7 bzw. allgemein ein Träger. Der Außenumfang bzw. der Außendurchmesser der Schultern 5b ist somit geringer als der Innenumfang bzw. Innendurchmesser der Umfangswandung 4 bzw. der Schwallwand 7. Der ringförmige Vorsprung 5a weist vorzugsweise wenigstens annähernd einen Außenumfang bzw. einen Außendurchmesser auf, der dem Außendurchmesser der Umfangswandung 4 bzw. der Schwallwand 7 entspricht. Die Umfangswandung 4 und die Schwallwand 7 werden soweit auf die Schultern 5b aufgeschoben, bis diese wenigstens annähernd an dem ringförmigen Vorsprung 5a anliegen. In dieser Position werden die Umfangswandung 4 und die Schwallwand 7 mit der Stirnwandung 5 vorzugsweise über eine umlaufende Schweißnaht verschweißt. Durch die Hauptfläche 50 der Stirnwand 5, die sich zwischen der hülsenartigen Verlängerung erstreckt, wird ein flächiges und geschlossenes Bodenteil ausgebildet, so dass der Befüllraum 6 an diesem Ende der Umfangswandung 4 zuverlässig abgeschlossen ist. Prinzipmäßig in Fig. 6 dargestellt ist auch eine Mutter 11 im Bereich der Öffnung 8 der Schwallwand 7, an die der strichliniert dargestellte Zusatzbehälter 3 angebracht werden kann.

Fig. 8 zeigt eine weitere alternative Ausgestaltung, bei der vorgesehen ist, dass die Schwallwand 7 (bzw. allgemein der Träger) und der Zusatzbehälter 3 an ihren aneinandergrenzenden Stirnseite einen zueinander korrespondierenden Verlauf aufweisen, so dass die Stirnseite des Zusatzbehälters 3 wenigstens bereichsweise formschlüssig an der zugewandten Stirnseite der Schwallwand 7 anliegt. Der in Fig. 8 dargestellte Verlauf ist nur prinzipmäßig zur Erläuterung gedacht. Grundsätzlich ist jeder korrespondierende Verlauf der Stirnseiten geeignet, eine formschlüssige Verbindung herzustellen, dies kann gegebenenfalls auch nur partiell erfolgen.

In einer nicht näher dargestellten alternativen Ausgestaltung kann auch vorgesehen sein, dass der Zusatzbehälter 3 an dem Träger 7 über eine formschlüssige Verbindung, beispielsweise einer Schwalbenschwanzverbindung, so befestigt wird, dass gegebenenfalls nur noch Fixierelemente eingesetzt werden müssen, um ein ungewolltes Lösen der Schwalbenschwanzverbindung zu vermeiden. Vorzugsweise kann dabei der Zusatzbehälter 3 von oben in eine Schwalbenschwanzverbindung des Trägers 7 eingesetzt und dort mit Fixierelementen, beispielsweise Schrauben, gehalten werden.

## Patentansprüche

1. Nutzfahrzeugtank mit einem Kraftstoffbehälter mit einer Umfangswandung und zwei Stirnwandungen, welche wenigstens einen Befüllraum für einen Kraftstoff ausbilden, und mit einem aus Kunststoff ausgebildeten Zusatzbehälter zur Aufnahme eines Kraftstoffs oder eines Betriebsstoffs, welcher an dem Kraftstoffbehälter befestigt ist,
**dadurch gekennzeichnet, dass** außenseitig auf eine Stirnwandung (5) des Kraftstoffbehälters (2) ein weiterer planparallel verlaufender Außenboden (5) oder eine Schwallwand (7)aufgeschweißt ist, wodurch ein doppelwandiger Außenboden ausgebildet ist, und wobei an dem äußeren der beiden Außenböden (5) oder der Schwallwand (7) der Zusatzbehälter (3) befestigt ist.

2. Nutzfahrzeugtank nach Anspruch 1,
**dadurch gekennzeichnet, dass** der Träger (7) eine Hauptfläche (70) aufweist, welche sich im Wesentlichen planparallel zu einer Hauptfläche (50) der Stirnwandung (5) des Kraftstoffbehälters (2) erstreckt, wobei sich an die Hauptfläche (70) des Trägers (7) ein im Wesentlichen rechtwinklig zu der Hauptfläche (70) verlaufendes hülsenartiges Kontaktstück (71) anschließt, dessen freies Ende mit der Stirnwandung (5) verschweißt ist und die Hauptfläche (70) des Trägers (7) auf Abstand zu der Hauptfläche (50) der Stirnwandung (5) hält.

3. Nutzfahrzeugtank nach Anspruch 1 oder 2,
**dadurch gekennzeichnet, dass** die Stirnwandung (5) des Kraftstoffbehälters (2), an der der Zusatzbehälter (3) befestigt ist, eine Trennwand des Kraftstoffbehälters (2) ist.

4. Nutzfahrzeugtank nach einem der Ansprüche 1 bis 3,
**dadurch gekennzeichnet, dass** die Stirnwandung (5), an der der Zusatzbehälter (3) befestigt ist, eine hülsenartige Verlängerung aufweist, auf deren einem Ende die Umfangswandung (2) und auf deren anderem Ende der Träger (7) aufgeschoben und verschweißt ist.

5. Nutzfahrzeugtank nach einem der Ansprüche 1 bis 4,
**dadurch gekennzeichnet, dass** der Träger (7) eine Schwallwand des Kraftstoffbehälters (2) ist und wenigstens eine Öffnung in der Schwallwand (7) als Aufnahme (9) verwendet wird und der Zusatzbehälter (3) mit wenigstens einem Fixierelement (10) versehen ist, wobei zur Befestigung des Zusatzbehälters (3) an der Schwallwand (7) das Fixierelement (10) mit der Aufnahme (9) in Eingriff bringbar ist.

6. Nutzfahrzeugtank nach einem der Ansprüche 1 bis 4,
**dadurch gekennzeichnet, dass** der Träger (7) eine Trennwand und/oder eine Zwischenwand und/oder eine Stirnwand und/oder ein Außenboden des Kraftstoffbehälters (2) ist und der Träger (7) wenigstens eine Aufnahme (9) aufweist und der Zusatzbehälter (3) mit wenigstens einem Fixierelement (10) versehen ist, wobei zur Befestigung des Zusatzbehälters (3) an dem Träger (7) das Fixierelement (10) mit der Aufnahme (9) in Eingriff bringbar ist.

7. Nutzfahrzeugtank nach einem der Ansprüche 5 oder 6,
**dadurch gekennzeichnet, dass** die Aufnahme (9) ein Gewinde aufweist oder mit einer Mutter (11) versehen ist und das Fixierelement (10) eine Schraube ist und der Zusatzbehälter (3) eine Durchgangsbohrung (12) zur Durchführung der Schraube (10) aufweist, welche sich von einer Stirnseite des Zusatzbehälters (3) zu einer gegenüberliegenden Stirnseite erstreckt, wobei die Schraube (10) an der von dem Kraftstofftank (2) abgewandten Stirnseite in die Durchgangsbohrung (12) einführbar ist und die Durchgangsbohrung (12) durchdringt, wobei die Schraube (10) mit dem Gewinde oder der Mutter (11) der Aufnahme (9) des Trägers (7) verschraubbar ist.

8. Nutzfahrzeugtank nach einem der Ansprüche 1 bis 7,
**dadurch gekennzeichnet, dass** zwischen dem Träger (7) und dem Zusatzbehälter (3) wenigstens ein Adapterelement (13) angeordnet ist, wobei das Adapterelement (13) von wenigstens einem Fixierelement (10), welches den Zusatzbehälter (3) an dem Träger (7) befestigt, durchdrungen ist.

9. Nutzfahrzeugtank nach einem der Ansprüche 1 bis 8,
**dadurch gekennzeichnet, dass** der Zusatzbehälter (3) einen Befüllraum mit einem Volumen von 5 bis 40 Litern, vorzugsweise 15 bis 25 Litern, aufweist und die Höhe des Zusatzbehälters (3) wenigstens annähernd der Höhe des Kraftstoffbehälters (2) und/oder die Breite des Zusatzbehälters (3) wenigstens annähernd der Breite des Kraftstoffbehälters (2) entspricht.

10. Nutzfahrzeugtank nach einem der Ansprüche 1 bis 9,
**dadurch gekennzeichnet, dass** der Träger (7) und der Zusatzbehälter (3) an ihren aneinandergrenzenden Stirnseiten einen zueinander korrespondierenden Verlauf aufweisen, so dass die Stirnseite des Zusatzbehälters (3) wenigstens bereichsweise formschlüssig an die Stirnseite des Trägers (7) anlegbar ist.

## Claims

1. Commercial vehicle tank comprising a fuel tank with a circumferential wall and two end walls which form at least one filling chamber for a fuel, and comprising an additional tank, which is formed from plastic, for receiving a fuel or an operating fluid, said additional tank being fastened to the fuel tank, **characterized in that** one end wall (5) of the fuel tank (2) has, welded onto the outside thereof, a further outer base (5), which runs plane-parallel thereto, or a splash wall (7), thus forming a double-walled outer base, and wherein the additional tank (3) is fastened to the outer of the two outer bases (5) or to the splash wall (7).

2. Commercial vehicle tank according to Claim 1, **characterized in that** the support (7) has a main surface (70) which extends substantially plane-parallel to a main surface (50) of the end wall (5) of the fuel tank (2), wherein the main surface (70) of the support (7) is adjoined by a sleeve-like contact piece (71) which runs substantially at a right angle to the main surface (70) and the free end of which is welded to the end wall (5) and keeps the main surface (70) of the support (7) at a distance from the main surface (50) of the end wall (5).

3. Commercial vehicle tank according to Claim 1 or 2, **characterized in that** the end wall (5) of the fuel tank (2), to which end wall the additional tank (3) is fastened, is a partition of the fuel tank (2).

4. Commercial vehicle tank according to one of Claims 1 to 3, **characterized in that** the end wall (5) to which the additional tank (3) is fastened has a sleeve-like extension, at one end of which the circumferential wall (2) is pushed on and welded and at the other end of which the support (7) is pushed on and welded.

5. Commercial vehicle tank according to one of Claims 1 to 4, **characterized in that** the support (7) is a splash wall of the fuel tank (2) and at least one opening in the splash wall (7) is used as a receptacle (9), and the additional tank (3) is provided with at least one fixing element (10), wherein the fixing element (10) can be brought into engagement with the receptacle (9) in order to fasten the additional tank (3) to the splash wall (7).

6. Commercial vehicle tank according to one of Claims 1 to 4, **characterized in that** the support (7) is a partition and/or an intermediate wall and/or an end wall and/or an outer base of the fuel tank (2), and the support (7) has at least one receptacle (9) and the additional tank (3) is provided with at least one fixing element (10), wherein the fixing element (10) can be brought into engagement with the receptacle (9) in order to fasten the additional tank (3) to the support (7).

7. Commercial vehicle tank according to either of Claims 5 and 6, **characterized in that** the receptacle (9) has a thread or is provided with a nut (11), and the fixing element (10) is a screw, and the additional tank (3) has a through bore (12) for the passage of the screw (10), said through bore extending from one end side of the additional tank (3) to an opposite end side, wherein the screw (10) can be introduced into the through bore (12) on the end side facing away from the fuel tank (2) and passes through the through bore (12), wherein the screw (10) can be screwed to the thread or the nut (11) of the receptacle (9) in the support (7).

8. Commercial vehicle tank according to one of Claims 1 to 7, **characterized in that** at least one adapter element (13) is arranged between the support (7) and the additional tank (3), wherein the adapter element (13) is penetrated by at least one fixing element (10) which fastens the additional tank (3) to the support (7).

9. Commercial vehicle tank according to one of Claims 1 to 8, **characterized in that** the additional tank (3) has a filling chamber with a volume of 5 to 40 litres, preferably 15 to 25 litres, and the height of the additional container (3) corresponds at least approximately to the height of the fuel tank (2) and/or the width of the additional tank (3) corresponds at least approximately to the width of the fuel tank (2).

10. Commercial vehicle tank according to one of Claims 1 to 9, **characterized in that** those end sides of the support (7) and of the additional tank (3) which are adjacent to each other have a mutually corresponding profile, and therefore the end side of the additional tank (3) can be placed in a form-fitting manner at least in regions against the end side of the support (7).

## Revendications

1. Réservoir de véhicule utilitaire, comprenant un réservoir de carburant doté d'une paroi périphérique et de deux parois frontales qui forment au moins un espace de remplissage pour un carburant, et comprenant un réservoir auxiliaire réalisé en plastique pour recevoir un carburant ou un consommable, lequel réservoir auxiliaire est fixé au réservoir de carburant,
**caractérisé en ce**
**qu'**un autre fond extérieur (5) s'étendant de manière plan-parallèle ou une cloison brise-flot (7) est soudé(e) du côté extérieur sur une paroi frontale (5) du réservoir de carburant (2), de sorte qu'un fond extérieur à double paroi soit réalisé, et le réservoir auxiliaire (3) étant fixé au fond extérieur situé à l'extérieur parmi les deux fonds extérieurs (5) ou à la cloison brise-flot (7).

2. Réservoir de véhicule utilitaire selon la revendication 1,
**caractérisé en ce que**
le support (7) comprend une surface principale (70) qui s'étend de manière essentiellement plan-parallèle à une surface principale (50) de la paroi frontale (5) du réservoir de carburant (2), une pièce de contact (71) de type douille s'étendant essentiellement perpendiculairement à la surface principale (70) se raccordant à la surface principale (70) du support (7), l'extrémité libre de la pièce de contact étant soudée sur la paroi frontale (5) et maintenant la surface principale (70) du support (7) à distance de la surface principale (50) de la paroi frontale (5).

3. Réservoir de véhicule utilitaire selon la revendication 1 ou 2,
**caractérisé en ce que**
la paroi frontale (5) du réservoir de carburant (2), à laquelle est fixé le réservoir auxiliaire (3), est une cloison de séparation du réservoir de carburant (2).

4. Réservoir de véhicule utilitaire selon l'une quelconque des revendications 1 à 3,
**caractérisé en ce que**
la paroi frontale (5), à laquelle est fixé le réservoir auxiliaire (3), comprend un prolongement de type douille sur l'une des extrémités duquel est enfilée et soudée la paroi périphérique (2) et sur l'autre extrémité duquel est enfilé et soudé le support (7).

5. Réservoir de véhicule utilitaire selon l'une quelconque des revendications 1 à 4,
**caractérisé en ce que**
le support (7) est une cloison brise-flot du réservoir de carburant (2), et au moins une ouverture dans la cloison brise-flot (7) est utilisée en tant que logement (9), et le réservoir auxiliaire (3) est pourvu d'au moins un élément de fixation (10), l'élément de fixation (10) pouvant être amené en prise avec le logement (9) en vue de la fixation du réservoir auxiliaire (3) à la cloison brise-flot (7).

6. Réservoir de véhicule utilitaire selon l'une quelconque des revendications 1 à 4,
**caractérisé en ce que**
le support (7) est une cloison de séparation et/ou une cloison intermédiaire et/ou une cloison frontale et/ou un fond extérieur du réservoir de carburant (2), et le support (7) comprend au moins un logement (9), et le réservoir auxiliaire (3) est pourvu d'au moins un élément de fixation (10), l'élément de fixation (10) pouvant être amené en prise avec le logement (9) en vue de la fixation du réservoir auxiliaire (3) au support (7).

7. Réservoir de véhicule utilitaire selon la revendication 5 ou 6,
**caractérisé en ce que**
le logement (9) comprend un filetage ou est pourvu d'un écrou (11), et l'élément de fixation (10) est une vis, et le réservoir auxiliaire (3) comprend un alésage traversant (12) pour le passage de la vis (10), lequel alésage traversant s'étend à partir d'un côté frontal du réservoir auxiliaire (3) jusqu'à un côté frontal opposé, la vis (10) pouvant être insérée dans l'alésage traversant (12) du côté frontal opposé au réservoir de carburant (2) et traversant l'alésage traversant (12), la vis (10) pouvant être vissée dans le filetage ou l'écrou (11) du logement (9) du support (7).

8. Réservoir de véhicule utilitaire selon l'une quelconque des revendications 1 à 7,
**caractérisé en ce**
**qu'**entre le support (7) et le réservoir auxiliaire (3) est disposé au moins un élément adaptateur (13), l'élément adaptateur (13) étant traversé par au moins un élément de fixation (10) qui fixe le réservoir auxiliaire (3) sur le support (7).

9. Réservoir de véhicule utilitaire selon l'une quelconque des revendications 1 à 8,
**caractérisé en ce que**
le réservoir auxiliaire (3) comprend un espace de remplissage présentant un volume de 5 à 40 litres, de préférence de 15 à 25 litres, et la hauteur du réservoir auxiliaire (3) correspond au moins approximativement à la hauteur du réservoir de carburant (2) et/ou la largeur du réservoir auxiliaire (3) correspond au moins approximativement à la largeur du réservoir de carburant (2).

10. Réservoir de véhicule utilitaire selon l'une quelconque des revendications 1 à 9,
**caractérisé en ce que**
le support (7) et le réservoir auxiliaire (3) présentent une allure correspondant l'une à l'autre au niveau de leurs côtés frontaux adjacents l'un à l'autre, de telle sorte que le côté frontal du réservoir auxiliaire (3) puisse être appliqué contre le côté frontal du support (7) avec complémentarité de formes au moins dans certaines zones.
